(19) Europäisches Patentamt
European Patent Office
Office européen des brevets

(11) EP 1 817 318 B1

(12) **EUROPEAN PATENT SPECIFICATION**

(45) Date of publication and mention of the grant of the patent:
**28.08.2013 Bulletin 2013/35**

(21) Application number: **06712741.5**

(22) Date of filing: **25.01.2006**

(51) Int Cl.:
***C07F 5/02*** *(2006.01)*

(86) International application number:
**PCT/JP2006/301598**

(87) International publication number:
**WO 2006/080538 (03.08.2006 Gazette 2006/31)**

(54) **STABILIZING METHOD AND STABILIZED COMPOSITION FOR ARYL BORON COMPOUNDS**

VERFAHREN ZUR STABILISIERUNG UND STABILISIERTE ZUSAMMENSETZUNGEN FÜR ARYLBORVERBINDUNGEN

PROCÉDÉ DE STABILISATION ET COMPOSITION STABILISÉE POUR DES COMPOSÉS ARYLIQUES DU BORE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.01.2005 JP 2005021556**

(43) Date of publication of application:
**15.08.2007 Bulletin 2007/33**

(73) Proprietor: **Nippon Shokubai Co.,Ltd.**
**Osaka-shi, Osaka 541-0043 (JP)**

(72) Inventor: **KATSUMI, Ikuyo**
**ka, 5530002 (JP)**

(74) Representative: **Müller-Boré & Partner**
**Patentanwälte**
**Grafinger Straße 2**
**81671 München (DE)**

(56) References cited:
**EP-A- 0 889 047**
**EP-A- 0 903 351**
**JP-A- 09 291 092**
**JP-A- 11 092 480**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a stabilizing method and a stabilized composition for aryl boron compounds.

Tris(pentafluorophenyl)borane, a typical example of the aryl boron compounds, is used as a co-catalyst of metallocene catalysts which are polymerization catalysts for polyolefins such as polyethylene and polypropylene, or a Lewis acid catalyst for ring-opening polymerization of ethylene oxide or propylene oxide, or as a starting material for synthesizing its derivatives such as pentafluorophenylboronic acid, bis(pentafluorophenyl)borinic acid, and tetrakis(pentafluorophenyl)borate magnesium halide.

Tris (pentafluorophenyl) borane is produced by, for example, a method in which pentafluorophenyl magnesium halide is produced from pentafluorobenzene, chloropentafluorobenzene, or bromopentafluorobenzene, and the pentafluorophenyl magnesium halide is reacted and the pentafluorophenyl magnesium halide is reacted with an ether complex of boron trifluoride (see, e.g., Japanese Patent Laid-open Publications No. 6-247978 and No. 8-253485, and J.L.W. Pohlmann and one other person, "Preparation and Characterization of Group IIIA Derivatives", Zeitschrift für Naturforschung (Germany), 1965, vol. 20b, pp. 5-11), or a method in which pentafluorophenyllithium is produced from pentafluorobenzene, chloropentafluorobenzene, or bromopentafluorobenzene, and the pentafluorophenyllithium is reacted with boron trichloride (see, e.g., Japanese Patent Laid-open Publications No. 6-247979 and No. 2000-1492, and A.G. Massey and two other persons, "Tris(pentafluorophenyl)boron", Proceedings of the Chemical Society (England), July, 1963, p. 212). Even if either method is used, tris(pentafluorophenyl)borane, and magnesium chlorofluoride, magnesium bromofluoride or lithium chloride, which is a by-product, are obtained in the form of their being dissolved or suspended in a solvent including an ether solvent after the completion of reaction.

However, when tris(pentafluorophenyl)borane is used as a catalyst, the catalyst activity of tris(pentafluorophenyl)borane is deteriorated, if there are a by-product salt and an ether solvent as described above. Thus, in order to fully exploit the catalytic ability of tris (pentafluorophenyl) borane, it is necessary to remove the ether solvent which has been coordinated to the tris(pentafluorophenyl)borane, as described in, for example, paragraph [0024] of Japanese Patent Laid-open Publication No. 6-247978 and paragraph [0021] of Japanese Laid-open Patent Publication No. 6-247979. When tris(pentafluorophenyl)borane is used as a starting material to produce its derivatives, a step of removing a by-product salt after producing the derivatives becomes complicated, and further there is also a problem that particularly when the by-product salt is magnesium chlorofluoride or magnesium bromofluoride, hydrogen fluoride, which causes the corrosion of an equipment, is produced, if the derivatives are subjected to acid treatment for removal of the by-product salt. Thus, in order to produce the derivatives of tris(pentafluorophenyl)borane with safety and efficiency, it is necessary to remove the by-product salt previously.

Tris(pentafluorophenyl)borane is usually obtained as a solution containing the tris (pentafluorophenyl) borane in a hydrocarbon solvent by addition of a hydrocarbon solvent having a higher boiling point than an ether solvent, replacing the ether solvent with the hydrocarbon solvent through distillation, and filtering a by-product salt precipitated (e.g., magnesium bromofluoride). This solution is used as it is, or tris(pentafluorophenyl)borane is isolated from the solution for use. Tris(pentafluorophenyl)borane may be used immediately after its production, but there may also be some cases where it is necessary to store it until it is used. When tris(pentafluorophenyl)borane is stored, it is stored as a solution or slurry obtained by dissolving or suspending it in a hydrocarbon solvent because the tris (pentafluorophenyl)borane is unstable in the air, as described in, for example, paragraph [0031] of Japanese Patent Laid-open Publication No. 2000-1492.

However, the present inventor has noted that even if tris(pentafluorophenyl)borane is stored in an airtight container in the form of a solution obtained by dissolving it in a hydrocarbon solvent, the tris (pentafluorophenyl) borane is gradually decomposed by a trace of water contained in the solvent and its purity is decreased even by about 5% to 10% several months to several years later, whereas its purity is about 97% to 98% just after its production. When tris (pentafluorophenyl)borane, which is an expensive reagent, is used as a starting material to produce its derivatives, if the reagent with slightly lower purity is used, the purity and yield of a product obtained by such a production are decreased, and consequently, the cost of its production is increased; therefore, the present inventor has considered that the decomposition of tris(pentafluorophenyl)borane should be inhibited as far as possible.

Thus, the present inventor has developed a stabilizing method in which an inorganic metal salt having a fluorine atom is mixed into a solution containing a fluoroarylboron compound in a hydrocarbon solvent, as a method for storing a fluoroarylboron compound such as tris (pentafluorophenyl) borane stably, and we have already filed a patent application (see Japanese Patent Laid-open Publication No. 11-29576).

However, a stabilized composition obtained by this method has problems that because the inorganic metal salt as a stabilizer is not substantially dissolved in the hydrocarbon solvent even by heating, this composition forms a heterogeneous system, and therefore, this composition is inconvenient in handling and the inorganic metal salt needs to be removed by filtration at the time of use. In addition, there is a problem that the addition of a stabilizer can inhibit the decomposition of a fluoroarylboron compound as compared with the case where the stabilizer is not added, but the fluoroarylboron compound is decomposed in part.

EP 0 903 351 A1 discloses a method for handling a fluorinated aryl boron compound in which the fluorinated aryl boron compound is handled as a slurry in a hydrocarbon solvent. Zjis document also discloses a method for preparing a solution of a fluorinated aryl boron compound in a hydrocarbon solvent. The method comprises dissolving the fluorinated ary boron compound into a hydrocarbon solvent in a substantially sealed vessel to form a solution in the hydrocarbon solvent with the concentration of the fluorinated aryl boron compound being from 1% by weight to 10% by weight.

Under the above-described circumstances, it is an obj ect to be attained by the present invention to provide a stabilizing method and a stabilized composition, which are simple and easy to handle and do not need to remove insoluble matter at the time of use because the composition forms a substantially homogeneous system in the case of a solution or forms a substantially homogeneous system by heating in the case of slurry, and which make it possible to store aryl boron compounds stably over a long term, while keeping their high purity.

The present inventor has intensively studied in order to improve the storage stability of aryl boron compounds, of which typical example is tris(pentafluorophenyl)borane. As a result, we have found that when an ether compound is mixed, which is not considered to be added to solutions of aryl boron compounds in a hydrocarbon solvent because the ether compound inherently impairs the catalyst activity of the aryl boron compounds, the aryl boron compounds can

be stored stably over a long term, while keeping their high purity, in the form of forming a substantially homogeneous system in the case of a solution or in the form of forming a substantially homogeneous system by heating in the case of slurry. Furthermore, because it has been found that an aryl boron compound, for example, tris(pentafluorophenyl)borane, is decomposed into bis(pentafluorophenyl)borinic acid, which is a diarylborinic acid, and pentafluorobenzene, which is an aryl compound, by way of a complex in which a water molecule is coordinated to the aryl boron compound, as shown by the following formula:

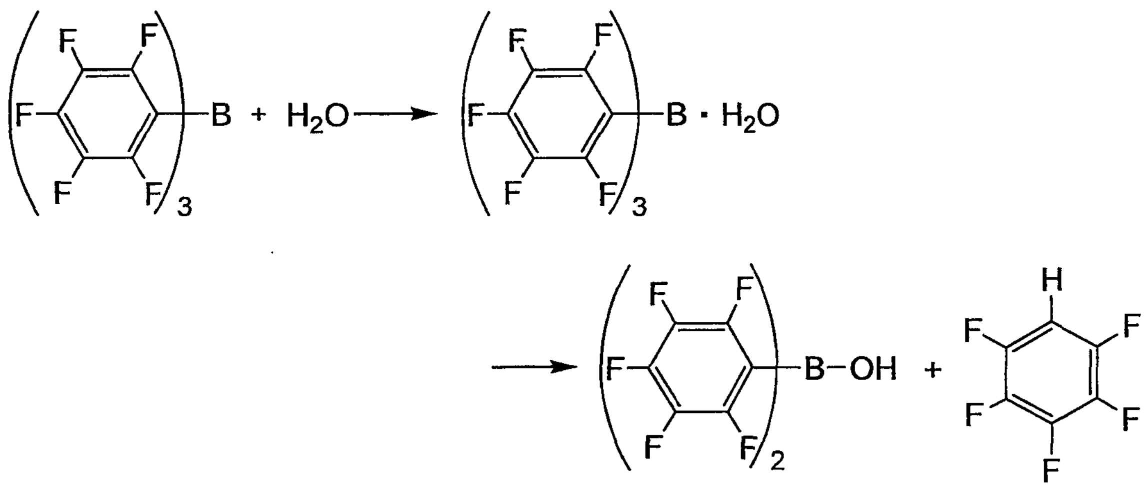

the present inventor has found that at the time of storing an aryl boron compound, if a compound such as an ether compound, which has higher affinity for the aryl boron compound than water, is coordinated to the aryl boron compound, the storage stability against moisture can be secured. These findings have now led to the completion of the present invention.

Thus, a method for stabilizing an aryl boron compound of formula (1):

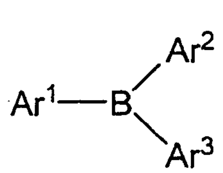

(1)

wherein $Ar^1$, $Ar^2$, and $Ar^3$ are independently a substituted or non-substituted aryl group, in which when the aryl group is substituted, a substituent (or substituents) is (are) at least one selected from halogen atoms, alkyl groups, and alkoxy groups, comprising mixing an ether compound of formula (2):

$R^1$-O-$R^2$ (2)

wherein $R^1$ and $R^2$ are independently an alkyl group, an alkoxyalkyl group, or a substituted or non-substituted aryl group, or $R^1$ and $R^2$ may be combined to form a substituted or non-substituted oxygen-containing heterocycle together with an

adjacent oxygen atom, in which when the aryl group is substituted and/or when the oxygen-containing heterocycle is substituted, a substituent (or substituents) is (are) at least one selected from halogen atoms, alkyl groups, and alkoxy groups, as a stabilizer, into a solution or slurry containing the aryl boron compound in a hydrocarbon solvent, wherein the molar ratio of the stabilizer to the aryl boron compound is 0.5 or higher.

The stabilized composition of an aryl boron compound of formula (1):

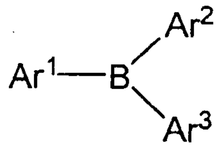

(1)

wherein $Ar^1$, $Ar^2$, and $Ar^3$ are independently a substituted or non-substituted aryl group, in which when the aryl group is substituted, a substituent (or substituents) is (are) at least one selected from halogen atoms, alkyl groups, and alkoxy groups, and an ether compound of formula (2):

$R^1$-O-$R^2$ (2)

wherein $R^1$ and $R^2$ are independently an alkyl group, an alkoxyalkyl group, or a substituted or non-substituted aryl group, or $R^1$ and $R^2$ may be combined to form a substituted or non-substituted oxygen-containing heterocycle together with an adjacent oxygen atom, in which when the aryl group is substituted and/or when the oxygen-containing heterocycle is substituted, a substituent (or substituents) is (are) at least one selected from halogen atoms, alkyl groups, and alkoxy groups, as a stabilizer, in a hydrocarbon solvent, wherein the molar ratio of the stabilizer to the aryl boron compound is 0.5 or higher.

The above-described aryl boron compound is preferably an aryl boron compound of formula (1):

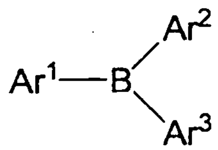

(1)

wherein $Ar^1$, $Ar^2$, and $Ar^3$ are aryl groups substituted with at least one fluorine atom.

According to the stabilizing method of the present invention, it becomes possible to store the aryl boron compound stably over a long term, while keeping high purity, in the form of forming a substantially homogeneous system in the case of a solution or in the form of forming a substantially homogeneous system by heating in the case of slurry. According to the stabilized composition of the present invention, it is simple and easy to handle and it is not necessary to remove insoluble matter at the time of use because the aryl boron compound forms a substantially homogeneous system in the case of a solution or forms a substantially homogeneous system by heating in the case of slurry. In addition, because the purity of an aryl boron compound is not substantially decreased after stored over a long term, for example, when the aryl boron compound is used as a reaction catalyst or a co-catalyst, it can exhibit high catalyst activity, and when it is used as a starting material for producing its derivatives, the purity and yield of a product obtained by such a production can be improved.

Figure 1 is a graph showing the storage stability of tris (pentafluorophenyl)borane, in which the symbol "-Δ-" indicates the results of Example 1 (diethyl ether was added); the symbol "-o-", the results of Example 2 (1,2-dimethoxyethane was added); the symbol "-A-"; the results of Example 3 (1,2-dimethoxyethane was added); the symbol "-■-", the results of Example 4 (1,2-dimethoxyethane was added) ; the symbol "-*-", the results of Example 5 (diisopropyl ether was added) ; and the symbol "-●-", the results of Comparative Example 1 (no addition).

In the method for stabilizing an aryl boron compound according to the present invention, the mixing of a compound which has higher affinity for the aryl boron compound than water, as a stabilizer, into a solution or slurry containing the aryl boron compound in a hydrocarbon solvent, makes the aryl boron compound stabilized. As described above, because an aryl boron compound is decomposed into a diarylborinic acid and an aryl compound by way of a complex in which a water molecule is coordinated to the aryl boron compound, it is considered that at the time of storing an aryl boron compound, if a compound which has higher affinity for the aryl boron compound than water is coordinated to the aryl boron compound, this prevents the aryl boron compound from reacting with moisture and the storage stability of the aryl boron compound against moisture can be improved.

In the stabilizing method of the present invention, mixing a stabilizer into a solution or slurry containing an aryl

boron compound in a hydrocarbon solvent means bringing the stabilizer to a state in which the stabilizer is present in the solution or slurry, and a method for bringing a stabilizer to such a state is not particularly limited. For example, an appropriate method may be selected as required, such as a method of adding a stabilizer to a solution or slurry containing an aryl boron compound in a hydrocarbon solvent, a method of dissolving or suspending an aryl boron compound in a hydrocarbon solvent to which a stabilizer has previously been added, a method of adding simultaneously an aryl boron compound and a stabilizer to a hydrocarbon solvent, and a method of treating an aryl boron compound previously with a stabilizer and then dissolving or suspending the treated aryl boron compound in a hydrocarbon solvent.

A solution or slurry containing an aryl boron compound in a hydrocarbon solvent can easily be obtained, for example, by carrying out "solvent exchange" in which an ether solvent is exchanged with a hydrocarbon solvent after producing the aryl boron compound and further by removing precipitated inorganic matter through filtration. Alternatively, the solution or slurry containing an aryl boron compound in a hydrocarbon solvent can be obtained by dissolving or suspending the aryl boron compound isolated or obtained from others in a hydrocarbon solvent, or by carrying out "solvent exchange" in which an ether solvent is exchanged with a hydrocarbon solvent after dissolving or suspending the aryl boron compound once in any other solvent such as an ether solvent.

An aryl boron compound to be stabilized by the method of the present invention is of formula (1):

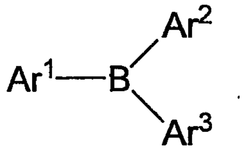

(1)

wherein $Ar^1$, $Ar^2$, and $Ar^3$ are independently a substituted or non-substituted aryl group, in which when the aryl group is substituted, a substituent (or substituents) is (are) at least one selected from halogen atoms, alkyl groups, and alkoxy groups. A process for producing this compound is not particularly limited, but this compound may be produced by any of the previously well-known process. The aryl boron compound can be obtained by reacting, for example, the corresponding arylmagnesium derivative or aryllithium derivative with boron halide in, for example, an ether solvent. Alternatively, as an aryl boron compound, a compound supplied from others, such as a commercially available product, may be used without producing it for oneself.

In the above formula (1), all or part of $Ar^1$, $Ar^2$, and $Ar^3$ may be the same or different from each other, but may preferably be the same. The substituted or non-substituted aryl group represented by $Ar^1$, $Ar^2$, or $Ar^3$ refers to an aryl group which is substituted or an aryl group which is not substituted. Examples of the aryl group may include aryl groups having 6 to 10 carbon atoms, specific examples of which are a phenyl group, a naphthyl group, a tetrahydronaphthyl group, an indenyl group, and an indanyl group. In these aryl groups, a phenyl group and a naphthyl group may particularly be preferred. When the aryl group is substituted, a substituent (or substituents) is (are) at least one selected from halogen atoms, alkyl groups, and alkoxy groups. Specific examples of the halogen atoms which can become a substituent (or substituents) may include a fluorine atom, a chlorine atom, a bromine atom, and an iodine atom. Examples of the alkyl groups which can become a substituent (or substituents) may include alkyl groups having 1 to 6 carbon atoms, specific examples of which are a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a hexyl group, an isohexyl group, a 1-methylpentyl group, a 1,3-dimethylbutyl group, a 3,3-dimethylbutyl group, a 2-ethylbutyl group, a cyclopentyl group, and a cyclohexyl group. Examples of the alkoxy groups which can become a substituent (or substituents) may include alkoxy groups having 1 to 6 carbon atoms, specific examples of which are a methoxy group, an ethoxy group, a propoxy group, an isopropoxy group, a butoxy group, an isobutoxy group, a sec-butoxy group, a tert-butoxy group, a pentyloxy group, an isopentyloxy group, a neopentyloxy group, a tert-pentyloxy group, a hexyloxy group, an isohexyloxy group, a 1-methylpentyloxy group, a 1,3-dimethybutoxy group, a 3,3-dimethybutoxy group, a 2-ethylbutoxy group, a cyclopentyloxy group, and a cyclohexyloxy group.

Specific examples of the aryl boron compound are triphenylborane, tris(pentafluorophenyl)borane, tris(2,3,4,6-tetrafluorophenyl)borane, tris(2,3,5,6-tetrafluorophenyl)borane, tris(2,3,5-trifluorophenyl)borane, tris(2,4,6-trifluorophenyl)borane, tris(2,5-difluorophenyl)borane, tris(2,3,5,6-tetrafluoro-4-methylphenyl)borane, tris(2,3,4,6-tetrafluoro-5-methylphenyl)borane, tris(2,4,5-trifluoro-6-methylphenyl)borane, tris(2,3,6-trifluoro-4-methylphenyl)borane, tris(2,4,6-trifluoro-3-methylphenyl)borane, tris(2,6-difluoro-3-methylphenyl)borane, tris(2,4-difluoro-5-methylphenyl)borane, tris (3,5-difluoro-2-methylphenyl)borane, tris(4-methoxy-2,3,5,6-tetrafluorophenyl)borane, tris(3-methoxy-2,4,5,6-tetrafluorophenyl)borane, tris(2-methoxy-3,5,6-trifluorophenyl)borane, tris(3-methoxy-2,5,6-trifluorophenyl)borane, tris(3-methoxy-2,4,6-trifluorophenyl)borane, tris(2-methoxy-3,5-difluorophenyl)borane, tris(3-methoxy-2,6-difluorophenyl)borane, tris(3-methoxy-4,6-difluorophenyl)borane, tris(2-methoxy-4,6-difluorophenyl)borane, tris(4-methoxy-2,6-difluorophenyl) borane, tris(pentachlorophenyl)borane, tris(2,3,4,6-tetrachlorophenyl)borane, tris(2,3,5,6-tetrachlorophenyl)borane, tris (2,3,5-trichlorophenyl)borane, tris(2,4,6-trichlorophenyl)borane, tris(2,5-dichlorophenyl)borane, tris(2,3,5,6-tetrachloro-4-methylphenyl)borane, tris(2,3,4,6-tetrachloro-5-methylphenyl)borane, tris(2,4,5-trichloro-6-methylphenyl)borane, tris(2,3,6-trichloro-4-methylphenyl)borane, tris(2,4,6-trichloro-3-methylphenyl)borane, tris(2,6-dichloro-3-methylphenyl)borane, tris(2,4-dichloro-5-methylphenyl)borane, tris(3,5-dichloro-2-methylphenyl)borane, tris(4-methoxy-2,3,5,6-tetrachloro)borane, tris(3-methoxy-2,4,5,6-tetrachlorophenyl)borane, tris(2-methoxy-3,5,6-trichlorophenyl)borane, tris(3-methoxy-2,5,6-trichlorophenyl)borane, tris(3-methoxy-2,4,6-trichlorophenyl)borane, tris(2-methoxy-3,5-dichlorophenyl)borane, tris(-3-methoxy-2,6-dichlorophenyl)borane, tris(3-methoxy-4,6-dichlorophenyl)borane, tris(2-methoxy-4,6-dichlorophenyl)borane, tris(4-methoxy-2,6-dichlorophenyl)borane, tris(2,3,5,6-tetrafluoro-4-ethylphenyl)borane, tris(2,3,4,6-tetrafluoro-5-ethylphenyl)borane, tris(2,4,5-trifluoro-6-ethylphenyl)borane, tris(2,3,6-trifluoro-4-ethylphenyl)borane, tris(2,4,6-trifluoro-3-ethylphenyl)borane, tris(2,6-difluoro-3-ethylphenyl)borane, tris(2,4-difluoro-5-ethylphenyl)borane, tris(3,5-difluoro-2-ethylphenyl)borane, tris(4-ethoxy-2,3,5,6-tetrafluorophenyl)borane, tris(3-ethoxy-2,4,5,6-tetrafluorophenyl)borane, tris(2-ethoxy-3,5,6-trifluorophenyl)borane, tris(3-ethoxy-2,5,6-trifluorophenyl)borane, tris(3-ethoxy-2,4,6-trifluorophenyl)borane, tris(2-ethoxy-3,5-difluorophenyl)borane, tris(3-ethoxy-2,6-difluorophenyl)borane, tris(3-ethoxy-4,6-difluorophenyl)borane, tris(2-ethoxy-4,6-difluorophenyl)borane, tris(4-ethoxy-2,6-difluorophenyl)borane, tris(2,3,5,6-tetrachloro-4-ethylphenyl)borane, tris(2,3,4,6-tetrachloro-5-ethylphenyl)borane, tris(2,4,5-trichloro-6-ethylphenyl)borane, tris(2,3,6-trichloro-4-ethylphenyl)borane, tris(2,4,6-trichloro-3-ethylphenyl)borane, tris(2,6-dichloro-3-ethylphenyl)borane, tris(2,4-dichloro-5-ethylphenyl)borane, tris(3,5-dichloro-2-ethylphenyl)borane, tris(4-ethoxy-2,3,5,6-tetrachlorophenyl)borane, tris(3-ethoxy-2,4,5,6-tetrachlorophenyl)borane, tris(2-ethoxy-3,5,6-trichlorophenyl)borane, tris(3-ethoxy-2,5,6-trichlorophenyl)borane, tris(3-ethoxy-2,4,6-trichlorophenyl)borane, tris(2-ethoxy-3,5-dichlorophenyl)borane, tris(3-ethoxy-2,6-dichlorophenyl)borane, tris(3-ethoxy-4,6-dichlorophenyl)borane, tris(2-ethoxy-4,6-dichlorophenyl)borane, tris(4-ethoxy-2,6-dichlorophenyl)borane, tris(2,3,5,6-tetrabromo-4-ethylphenyl)borane, tris(2,3,4,6-tetrabromo-5-ethylphenyl)borane, tris(2,4,5-tribromo-6-ethylphenyl)borane, tris(2,3,6-tribromo-4-ethylphenyl)borane, tris(2,4,6-tribromo-3-ethylphenyl)borane, tris(2,6-dibromo-3-ethylphenyl)borane, tris(2,4-dibromo-5-ethylphenyl)borane, tris(3,5-dibromo-2-ethylphenyl)borane, tris(4-ethoxy-2,3,5,6-tetrabromophenyl)borane, tris(3-ethoxy-2,4,5,6-tetrabromophenyl)borane, tris(-2-ethoxy-3,5,6-tribromophenyl)borane, tris(3-ethoxy-2-,5,6-tribromophenyl)borane, tris(3-ethoxy-2,4,6-tribromophenyl)borane, tris(2-ethoxy-3,5-dibromophenyl)borane, tris(3-ethoxy-2,6-dibromophenyl)borane, tris(3-ethoxy-4,6-dibromophenyl)borane, tris(2-ethoxy-4,6-dibromophenyl)borane, and tris(4-ethoxy-2,6-dibromophenyl)borane. In these aryl boron compounds, tris(pentafluorophenyl)borane may particularly be preferred.

The hydrocarbon solvent used in the stabilizing method of the present invention is not particularly limited, so long as it dissolves the aryl boron compound and is a solvent composed mainly of a non-aqueous solvent which is inert against the stabilizing method of the present invention, and it may contain any other solvent than hydrocarbon solvents.

The hydrocarbon solvent is not particularly limited, specific examples of which are straight-chain, branched-chain, or cyclic aliphatic hydrocarbons, such as pentane, isopentane, cyclopentane, hexane, isohexane, cyclohexane, methylcyclohexane, ethylcyclohexane, heptane, octane, isooctane, nonane, decane, undecane, dodecane, tridecane, tetradecane, pentadecane, hexadecane, octadecane, paraffin, and Isopa-r-E (trade name; available fromExxon Chemical Co., a mixture of isoparaffins having about 10 carbon atoms); and aromatic hydrocarbons such as benzene, toluene, o-xylene, m-xylene, p-xylene, mixed xylene, 1,2,3-trimethylbenzene, 1,2,4-trimethylbenzene, 1,3,5-trimethylbenzene, ethylbenzene, propylbenzene, and butylbenzene. In addition, as a mixture composed mainly of aliphatic hydrocarbons or a mixture of aliphatic hydrocarbons and aromatic hydrocarbons, there can also be used petroleum fractions having boiling points of about 30°C to 200°C, such as petroleum ether, ligroin, petroleum benzine, coal tar naphtha (including solvent naphtha), petroleum naphtha, and industrial gasoline. These aliphatic hydrocarbons and aromatic hydrocarbons may have a functional group which is inert against the stabili zing method of the present invention. These hydrocarbon solvents may be used alone or in combination of two or more kinds thereof. In these hydrocarbon solvents, aliphatic hydrocarbons such as hexane, cyclohexane, methylcyclohexane, heptane, octane, isooctane, Isopar-E, nonane, decane, and octadecane, and aromatic hydrocarbons such as toluene and mixed xylene, may particularly be preferred.

The hydrocarbon solvent to be used in the present invention is not particularly required to be subjected to pretreatment, so long as it is of the grade for use as an ordinary solvent or reagent, but it may be subjected to pretreatment such as dehydration treatment in some cases from the viewpoint of inhibiting more sufficiently the decomposition of an aryl boron compound due to moisture.

The aryl boron compound can be dissolved in a hydrocarbon solvent by several percent or higher, although it may vary with a combination of the aryl boron compound and the hydrocarbon solvent as well as with temperature. The content, or the concentration, of the aryl boron compound in the hydrocarbon solvent is not particularly limited, but in order to carry out the storage, transportation, and transfer thereof further efficiently, the concentration may preferably be as high as possible and may be within a range of not lower than 0.5% by mass and not higher than 50% by mass, more preferably within a range of not lower than 1% by mass and not higher than 30% by mass, and more preferably within a range of not lower than 2% by mass and not higher than 10% by mass.

In the stabilizing method of the present invention, a substance to stabilize an aryl boron compound is a compound which has higher affinity for the aryl boron compound than water. The phrase "... has higher affinity for the aryl boron

compound than water" means that a substance can easily be combined with the aryl boron compound as compared with water, and once the substance is combined with the aryl boron compound, the aryl boron compound may less undergo decomposition due to moisture.

The compound to be mixed as a stabilizer may be used alone or in combination of two or more kinds thereof and is selected from ether compounds of formula (2):

$$R^1\text{-O-}R^2 \qquad (2)$$

wherein $R^1$ and $R^2$ is independently an alkyl group, an alkoxyalkyl group, or a substituted or non-substituted aryl group, or $R^1$ and $R^2$ may be combined to form a substituted or non-substituted oxygen-containing heterocycle together with an adjacent oxygen atom, in which when the aryl group is substituted and/or when the oxygen-containing heterocycle is substituted, a substituent (or substituents) is (are) at least one selected from halogen atoms, alkyl groups, and alkoxy groups.

In the above formula (2), $R^1$ and $R^2$ may be the same or different from each other. Examples of the alkyl group represented by $R^1$ or $R^2$ may include alkyl groups having 1 to 6 carbon atoms, specific examples of which are alkyl groups similar to those described above as a substituent (or substituents) of the substituted aryl group represented by $Ar^1$, $Ar^2$, or $Ar^3$. Examples of the alkoxyalkyl group represented by $R^1$ or $R^2$ may include alkoxyalky groups having 2 to 6 carbon atoms, specific examples of which are a methoxymethyl group, a 1-methoxyethyl group, a 2-methoxyethyl group, an ethoxymethyl group, a 1-methoxypropyl group, a 2-methoxypropyl group, a 3-methoxypropyl group, a 1-methyl-1-methoxyethyl group, a 1-methyl-2-methoxyethyl group, a 1-ethoxyethyl group, a 2-ethoxyethyl group, a propoxymethyl group, an isopropoxymethyl group, a 1-methoxybutyl group, a 2-methoxybutyl group, a 3-methoxybutyl group, a 4-methoxybutyl group, a 2-methyl-1-methoxypropylgroup, a 2-methyl-2-methoxypropyl group, a 2-methyl-3-methoxypropyl group, a 1-methyl-1-methoxypropyl group, a 1-methyl-2-methoxypropyl group, a 1-methyl-3-methoxypropyl group, a 1,1-dimethyl-2-methoxyethyl group, a 1-ethoxypropyl group, a 2-ethoxypropyl group, a 3-ethoxypropyl group, a 1-ethoxy-1-methylethyl group, a 2-ethoxy-1-methylethyl group, a 1-propoxyethyl group, a 2-propoxyethyl group, a 1-isopropoxyethyl group, a 2-isopropoxyethyl group, a butoxymethyl group, an isobutoxymethyl group, a sec-butoxymethyl group, a tert-butoxymethyl group, a 1-methoxypentyl group, a 2-methoxypentyl group, a 3-methoxypentyl group, a 4-methoxypentyl group, a 5-methoxypentyl group, a 3-methyl-1-methoxybutyl group, a 3-methyl-2-methoxybutyl group, a 3-methyl-3-methoxybutyl group, a 3-methyl-4-methoxybutyl group, a 2,2-dimethyl-1-methoxypropyl group, a 2,2-dimethyl-3-methoxypropyl group, a 1,1-dimethyl-2-methoxypropyl group, a 1,1-dimethyl-3-methoxypropyl group, a 1-ethoxybutyl group, a 2-ethoxybutyl group, a 3-ethoxybutyl group, a 4-ethoxybutyl group, a 1-ethoxy-2-methylpropyl group, a 2-ethoxy-2-methylpropyl group, a 3-ethoxy-2-methylpropyl group, a 1-ethoxy-1-methylpropyl group, a 2-ethoxy-1-methylpropyl group, a 3-ethoxy-1-methylpropyl group, a 1,1-dimethylethyl-2-ethoxy group, a 1-propoxypropyl group, a 2-propoxypropyl group, a 3-propoxypropyl group, a 1-methyl-1-propoxyethyl group, a 1-methyl-2-propoxyethyl group, a 1-isopropoxypropyl group, a 2-isopropoxypropyl group, a 3-isopropoxypropyl group, a 1-isopropoxy-1-methylethyl group, a 2-isopropoxy-1-methylethyl group, a 1-butoxyethyl group, a 2-butoxyethyl group, a 1-isobutoxyethyl group, a 2-isobutoxyethyl group, a 1-sec-butoxyethyl group, a 2-sec-butoxyethyl group, a 1-tert-butoxyethylgroup, a 2-tert-butoxyethyl group, a pentyloxymethyl group, an isopentyloxymethyl group, a neopentyloxymethyl group, and a tert-pentyloxymethyl group. The substituted or non-substituted aryl group represented by $R^1$ or $R^2$ refers to an aryl group which is substituted or an aryl group which is not substituted. Examples of the aryl group may include aryl groups having 6 to 10 carbon atoms, specific examples of which are a phenyl group, a naphthyl group, a tetrahydronaphthyl group, an indenyl group, and an indanyl group. In these aryl groups, a phenyl group and a naphthyl group may particularly be preferred. When the aryl group is substituted, a substituent (or substituents) is (are) at least one selected from halogen atoms, alkyl groups, and alkoxy groups. Examples of the halogen atoms, the alkyl groups, and the alkoxy groups, which can become a substituent (or substituents), may include halogen atoms, alkyl groups, and alkoxy groups, which are similar to those described above as a substituent (or substituents) of the aryl group represented by $Ar^1$, $Ar^2$, or $Ar^3$.

In the above formula (2), the substituted or non-substituted oxygen-containing heterocycle, which $R^1$ and $R^2$ may be combined to form together with an adj acent oxygen atom, refers to an oxygen-containing heterocycle which is substituted or an oxygen-containing heterocycle which is not substituted, which $R^1$ and $R^2$ form together with an oxygen atom to which $R^1$ and $R^2$ are bonded. Examples of the oxygen-containing heterocycle may include heterocycles containing 1 to 8 oxygen atoms, preferably not more than 4 oxygen atoms, and more preferably not more than 2 oxygen atoms, specific examples of which are five-membered rings containing one oxygen atom, such as a furan ring, a dihydrofuran ring, and a tetrahydrofuran ring; six-membered rings containing one oxygen atom, such as a pyran ring, a dihydropyran ring, and a tetrahydropyran ring; five-membered rings containing two oxygen atoms, such as a dioxole ring and a dioxolane ring; six-membered rings containing two oxygen atoms, such as a dioxin ring, a dioxene ring, and a dioxane ring; six-membered rings containing one oxygen atom and one nitrogen atom, such as a morpholine ring; and crown ether rings containing 3 to 8 oxygen atoms, represented by formula (4):

$$(-CH_2-CH_2-O-)_n \qquad (4)$$

wherein n is an integer of not smaller than 3 and not greater than 8. When the heterocycle is substituted, a substituent (or substituents) is (are) at least one selected from halogen atoms, alkyl groups, and alkoxy groups. Examples of the halogen atoms, the alkyl groups, and the alkoxy groups, which can become a substituent (or substituents), may include halogen atoms, alkyl groups, and alkoxy groups, which are similar to those described above as a substituent (or substituents) of the substituted aryl group represented by $Ar^1$, $Ar^2$, or $Ar^3$.

Specific examples of the ether compoundmay include chain ethers containing one oxygen atom, such as dimethyl ether, ethyl methyl ether, diethyl ether, methyl propyl ether, isopropyl methyl ether, ethyl propyl ether, ethyl isopropyl ether, tert-butyl methyl ether, dipropyl ether, diisopropyl ether, butyl ethyl ether, ethyl isobutyl ether, tert-butyl ethyl ether, isopentyl methyl ether, ethyl isopentyl ether, hexyl methyl ether, dibutyl ether, dipentyl ether, diisopentyl ether, and dihexyl ether; chain ethers containing two oxygen atoms, such as formaldehyde dimethyl acetal, formaldehyde diethyl acetal, ethylene glycol dimethyl ether, ethylene glycol diethyl ether, acetaldehyde dimethyl acetal, and acetaldehyde diethyl acetal; chain ethers containing three oxygen atoms, such as diethylene glycol dimethyl ether and diethylene glycol diethyl ether; phenol ethers such as anisole, phenetole, o-cresol methyl ether, m-cresol methyl ether, p-cresol methyl ether, diphenyl ether, 1-methoxynaphthalene, 2-methoxynaphthalene, 1-ethoxynaphthalene, and 2-ethoxynaphthalene; cyclic ethers such as furan, 2-methylfuran, 3-methylfuran, 2,5-dimethylfuran, 2,5-dihydrofuran, tetrahydrofuran, 2-methyltetrahydrofuran,2,5-dimethyltetrahydrofuran, 2,3-dihydro-4H-pyran(3,4-dihydro-2H-pyran), tetrahydropyran, 3-methyltetrahydropyran, 1,3-dioxolane, 1,3-dioxane, 1,4-dioxane, morpholine, 4-methylmorpholine, 9-crown-3, 12-crown-4, and 18-crown-6. These ether compounds may be used alone or in combination of two or more kinds thereof. In these ether compounds, chain ethers containing not smaller than one and not greater than three oxygen atoms, anisole, and diphenyl ether may particularly be preferred.

The stabilizer to be used in the present invention does not particularly require pretreatment or the like, so long as it is at the grade for use as an ordinary solvent or reagent, but it may be subjected to pretreatment such as dehydration treatment in some cases from the viewpoint of inhibiting more sufficiently the decomposition of an aryl boron compound due to moisture. A stabilizer which is in the form of a gas or solid at room temperature under atmospheric pressure may be used in the form of a solution obtained by dissolving it in an appropriate solvent as required. In this case, if a hydrocarbon solvent is used as a solvent, it is not necessary to replace the solvent with new one and it is favorable.

The amount of a stabilizer to be mixed is selected in such a manner that the molar ratio of the stabilizer to the aryl boron compound is 0.5 or higher, more preferably in the range of not lower than 0.7 and not higher than 10.0, and still more preferably in the range of not lower than 1.0 and not higher than 5.0 from the viewpoint of effectively stabilizing the aryl boron compound.

As described above, the stabilizing method of the present invention is a method in which a compound, which has higher affinity for an aryl boron compound than water, is allowed to exist as an stabilizer in a solution containing the above aryl boron compound in a hydrocarbon solvent. By this method, the aryl boron compound can be stabilized over a long term (e.g., about 1 to several years), while keeping its high purity (e.g., about 96% to 98%). That is, according to the storing method of the present invention, for example, even when an aryl boron compound is stored over a long term in a state of a substantially homogeneous solution or slurry, decomposition reaction due to moisture can be inhibited, so that the aryl boron compound can easily and economically be stabilized. In this case, it is assumed that storing an aryl boron compound may include not only storing (or preserving) a solution or slurry of the aryl boron compound over a prescribed term but also transporting or transferring the solution or slurry of the aryl boron compound. The storage term is not particularly limited, whether it is a short term or a long term, and it may appropriately be determined according to the purpose.

With the use of such a stabilizing method, a stabilized composition can be obtained. That is, the stabilized composition of an aryl boron compound according to the present invention contains the aryl boron compound and said ether compound which has higher affinity for the aryl boron compound than water, as a stabilizer, in a hydrocarbon solvent. The kind and concentration of an aryl boron compound, the kind of a hydrocarbon solvent, and the kind and mixing amount of said stabilizer, which can be used in the stabilized composition of the present invention, and the meaning of a solution containing an aryl boron compound in a hydrocarbon solvent are as described above.

The stabilized composition of the present invention can improve the storage stability of an aryl boron compound and promotes the effective use of the aryl boron compound; therefore, the stabilized composition of the present invention may preferably contain substantially no compounds other than an ether compound to be mixed as a stabilizer, for example, compounds that interfere with the effective use of an aryl boron compound (hereinafter referred to as the "interference compounds"), for example, compounds that deteriorate the catalyst activity of an aryl boron compound when the aryl boron compound is as a catalyst, or compounds that cannot be dissolved in a hydrocarbon solvent and requires to be removed through filtration or the like when the aryl boron compound is used as a starting material to produce its derivatives, specific examples of which compounds are inorganic metal salts such as magnesium bromofluoride and lithium fluoride. The phrase "the stabilized composition of the present invention contain substantially no interference compounds" means that no such interference compounds are intentionally mixed, or that if such interference compounds are produced as by-products in the process of producing an aryl boron compound, these interference compounds are removed as far as possible in an ordinary treatment process.

The temperature at which the stabilized composition of the present invention is stored (or preserved), transported, or transferred may appropriately be determined according to the kind of aryl boron compound, the kind of hydrocarbon solvent, the boiling point of the hydrocarbon solvent, and the like, and it is not particularly limited, but may preferably be 200°C or lower, more preferably in the range of not lower than -50°C and not higher than 150°C, and more preferably in the range of not lower than -20°C and not higher than 100°C. It is not recommended to store (or preserve), transport, or transfer the solution at a temperature of higher than 200°C because this requires additionally a heating device, a cooling device for refluxing the hydrocarbon solvent, and the like, to keep this temperature, which is therefore disadvantageous from an industrial point of view. The pressure at which the stabilized composition of the present invention is stored (or preserved), transported, or transferred is not particularly limited, but it may be any of the normal pressure (atmospheric pressure), reduced pressure, and increased pressure.

The container for storing (or preserving), transporting, or transferring the stabilized composition of the present invention may appropriately be selected as required and is not particularly limited, but it is preferred to use a metal container such as a SUS bottle. In the stabilizing method disclosed in Japanese Patent Laid-open Publication No. 11-29576, as described in paragraph [0074], it is said that when a solution containing tris(pentafluorophenyl)borane in Isopar-E was put in a synthetic resin bottle and the solution was stored at room temperature for 192 hours without adding a stabilizer, the purity of the tris(pentafluorophenyl)borane was reduced by 34.3% from 96.7% to 62.4%. In contrast, according to the experiments of the present inventor, as described in the following Comparative Example 1, when a solution containing tris(pentafluorophenyl)borane in a mixed solvent of methylcyclohexane and toluene was put in a SUS bottle and the solution was stored at room temperature for 236 days without adding a stabilizer, the purity of the tris(pentafluorophenyl)borane was reduced by 5.3% from 98.2% to 92.9%. It is surprising, even if considering a difference between the solvents, that the rate of reduction in purity is significantly different thus according to whether the material of a storage container is a synthetic resin or a stainless steel. Therefore, as described above, the stabilized composition of the present invention, containing an aryl boron compound which is unstable toward moisture, may preferably be stored (or preserved), transported, or transferred using, for example, a metal container such as a SUS bottle.

The stabilized composition of an aryl boron compound according to the present invention is used as it is, without any treatment when the aryl boron compound is used as a starting material to produce its derivatives. However, the stabilized composition of the present invention may preferably be used after the removal of said stabilizer, that is an ether compound, which has higher affinity for the aryl boron compound than water, when the aryl boron compound is used as a catalyst. The method for removing a stabilizer is not particularly limited, but there may be used any of the methods well known in the art. For example, the stabilizer may be removed by distilling off a solvent and then heating an aryl boron compound having an ether compound coordinated thereto under reduced pressure to sublimate the ether compound, or by distilling off an ether compound under heating, if a hydrocarbon solvent has a higher boiling point than the ether compound, or by mixing other hydrocarbon solvent having a higher boiling point than the ether compound and then distil ling off an ether compound under heating, if a hydrocarbon solvent has a lower boiling point than the ether compound. The pressure in reducing pressure, the temperature and time in heating, the kinds and amounts of reagents to be used, and the kind and amount of solvent to be used may appropriately be determined according to the combination of an aryl boron compound, said stabilizer, and a hydrocarbon solvent, and they are not particularly limited.

The aryl boron compounds to be stabilized by the method of the present invention, particularly tris(pentafluorophenyl)borane, are useful, for example, as co-catalysts of metallocene catalysts which are polymerization catalysts for polyolefins such as polyethylene and polypropylene, or as Lewis acid catalysts of the ring-opening polymerization reaction of ethylene oxide or propylene oxide, or as starting materials for the synthesis of their derivatives such as pentafluorophenylboronic acid, bis(pentafluorophenyl)borinic acid, and tetrakis(pentafluorophenyl)borate magnesium halide.

Example

The present invention will be described below more specifically by reference to examples and comparative examples; however, it should be noted that the present invention is, of course, not restricted by the following examples, but can be put into practice after appropriate changes and/or modifications in a range adapted to the purport described above and below, all of which changes and modifications are included in the technical scope of the present invention. The procedure of determining the purity of tris(pentafluorophenyl)borane as an aryl boron compound is as follows:

<Purity of tris(pentafluorophenyl)borane>

Measurement samples for $^{19}F$-NMR were prepared by sampling a part of a solution being stored and mixing $CDCl_3$ into this solution under an atmosphere of nitrogen. $^{19}F$-NMR spectra were measured under prescribed conditions.

From the charts of $^{19}F$-NMR spectra obtained, there were determined the integration value ($I_T$) of a peak intensity given by the fluorine atoms in the ortho positions of the pentafluorophenyl group of tris(pentafluorophenyl)borane, the integration value ($I_B$) of a peak intensity given by the fluorine atoms in the ortho positions of the pentafluorophenyl group of bis(pentafluorophenyl)borinic acid which is a decomposition product of tris(pentafluorophenyl)borane, and the integration value ($I_P$) of a peak intensity given by the fluorine atoms in the ortho positions of pentafluorobenzene which is a decomposition product of tris(pentafluorophenyl)borane, and the purity (%) of tris (pentafluorophenyl) borane was calculated from the following equation:

$$\text{Purity of tris(pentafluorophenyl)borane (\%)} = \{I_T/(I_T + I_B + I_P)\} \times 100$$

<<Example 1>>

In this example, the storage stability of tris(pentafluorophenyl)borane was examined by mixing diethyl ether, which is a stabilizer, into a solution containing tris(pentafluorophenyl)borane, which is an aryl boron compound, in a mixed solvent of methylcyclohexane and toluene, which are hydrocarbon solvents.

A solution containing 30.89 g of tris(pentafluorophenyl)borane synthesized by the ordinary method (e.g., the method described in Japanese Patent Laid-open Publication No. 9-291092), 456.98 g of methylcyclohexane, and 73.95 g of toluene, was obtained. To this solution, 10.04 g of diethyl ether was added to prepare a test solution. In this test solution, the concentration of tris(pentafluorophenyl)borane was 5.4% by mass, relative to the total mass of the solution, and the molar ratio of diethyl ether to tris(pentafluorophenyl)borane was 2.2.

Just after the test solution was prepared, it was put in four SUS bottles, sealed, and stored under normal pressure at room temperature. A part of the test solution was taken out just after the preparation, i.e., at the initiation of storage (Day 0), at Day 33, Day 91, and Day 193, respectively, and by measuring $^{19}F$-NMR spectra of the test solution taken out, the purity (%) of tris(pentafluorophenyl)borane at every storage day was calculated. The results are shown in Table 1 and Figure 1 (indicated by the symbol "-Δ-"). The purity of tris(pentafluorophenyl)borane just after its production was 98.2%.

TABLE 1

| Storage days | Purity of tris(pentafluorophenyl)borane (%) |
|---|---|
| 0 | 98.2 |
| 33 | 98.1 |
| 91 | 98.7 |
| 193 | 97.8 |

<<Example 2>>

In this example, the storage stability of tris(pentafluorophenyl)borane was examined by mixing 1,2-dimethoxyethane, which is an stabilizer, into a solution containing tris(pentafluorophenyl)borane, which is an aryl boron compound, in a mixed solvent of methylcyclohexane and toluene, which are hydrocarbon solvents.

A test solution was obtained in the same manner as described in Example 1, except that a solution containing 36.81 g of tris(pentafluorophenyl)borane, 541.44 g of methylcyclohexane, and 78.18 g of toluene, in place of 30.89 g of tris(pentafluorophenyl)borane, 456.98 g of methylcyclohexane, and 73.95 g of toluene in Example 1, was prepared, and to this solution, 13.08 g of 1,2-dimethoxyethane was added in place of 10.04 g of diethyl ether. In this test solution, the concentration of tris(pentafluorophenyl)borane was 5.5% by mass, relative to the total mass of the solution, and the molar ratio of 1,2-dimethoxyethane to tris(pentafluorophenyl)borane was 2.0.

Just after the test solution was prepared, it was put in six SUS bottles, sealed, and stored under normal pressure at room temperature. A part of the test solution was taken out just after the preparation, i.e., at the initiation of storage (Day 0), at Day 31, Day 92, Day 186, Day 205, and Day 236, respectively, and by measuring $^{19}F$-NMR spectra of the test solution taken out, the purity (%) of tris(pentafluorophenyl)borane at every storage day was calculated. The results are shown in Table 2 and Figure 1 (indicated by the symbol "-o-"). The purity of tris(pentafluorophenyl)borane just after its production was 98.2%.

TABLE 2

| Storage days | Purity of tris(pentafluorophenyl)borane (%) |
|---|---|
| 0 | 98.2 |
| 31 | 98.4 |
| 92 | 98.0 |
| 186 | 98.2 |
| 205 | 98.3 |
| 236 | 98.3 |

<<Example 3>>

In this example, the storage stability of tris(pentafluorophenyl)borane was examined by mixing 1,2-dimethoxyethane, which is an stabilizer, into a solution containing tris(pentafluorophenyl)borane, which is an aryl boron compound, in a mixed solvent of methylcyclohexane and toluene which are hydrocarbon solvents.

A test solution was prepared in the same manner as described in Example 1, except that a solution containing 5.87 g of tris(pentafluorophenyl)borane, 86.31 g of methylcyclohexane, and 9.79 g of toluene, in place of 30. 89 g of tris (pentafluorophenyl)borane, 456.98 g of methylcyclohexane, and 73.95 g of toluene in Example 1, was prepared, and to this solution, 1.23 g of 1,2-dimethoxyethane was added in place of 10.04 g of diethyl ether. In this test solution, the concentration of tris(pentafluorophenyl)borane was 5.7% by mass, relative to the total mass of the solution, and the molar ratio of 1,2-dimethoxyethane to tris(pentafluorophenyl)borane was 1.2.

Just after the test solution was prepared, it was put in two SUS bottles, sealed, and stored under normal pressure at room temperature. A part of the test solution was taken out just after the preparation, i.e., at the initiation of storage (Day 0), and at Day 68, respectively, and by measuring $^{19}F$-NMR spectra of the test solution taken out, the purity (%) of tris(pentafluorophenyl) borane at every storage day was calculated. The results are shown in Table 3 and Figure 1 (indicated by the symbol "-▲-"). The purity of tris(pentafluorophenyl)borane just after its production was 98.3%.

TABLE 3

| Storage days | Purity of tris(pentafluorophenyl)borane (%) |
|---|---|
| 0 | 98.3 |
| 68 | 98.3 |

<<Example 4>>

In this example, the storage stability of tris(pentafluorophenyl)borane was examined by mixing 1,2-dimethoxyethane, which is an stabilizer, into a solution containing tris(pentafluorophenyl)borane, which is an aryl boron compound, in a mixed solvent of methylcyclohexane and toluene which are hydrocarbon solvents.

A test solution was prepared in the same manner as described in Example 1, except that a solution containing 5.77 g of tris(pentafluorophenyl)borane, 84.82 g of methylcyclohexane, and 9.62 g of toluene, in place of 30.89 g of tris (pentafluorophenyl)borane, 456.98 g of methylcyclohexane, and 73.95 g of toluene in Example 1, was prepared, and to this solution, 0.53 g of 1,2-dimethoxyethane was added in place of 10.04 g of diethyl ether. In this test solution, the concentration of tris(pentafluorophenyl)borane was 5. 7% by mass, relative to the total mass of the solution, and the molar ratio of 1,2-dimethoxyethane to tris(pentafluorbphenyl)borane was 0.52.

Just after the test solution was prepared, it was put in two SUS bottles, sealed, and stored under normal pressure at room temperature. A part of the test solution was taken out just after the preparation, i.e., at the initiation of storage (Day 0), and at Day 68, respectively, and by measuring $^{19}F$-NMR spectra of the test solution taken out, the purity (%) of tris (pentafluorophenyl)borane at every storage day was calculated. The results are shown in Table 4 and Figure 1 (indicated by the symbol "-■-"). The purity of tris(pentafluorophenyl)borane just after its production was 98.3%.

TABLE 4

| Storage days | Purity of tris(pentafluorophenyl)borane (%) |
|---|---|
| 0 | 98.3 |
| 68 | 96.8 |

<<Example 5>>

In this example, the storage stability of tris(pentafluorophenyl)borane was examined by mixing diisopropyl ether, which is an stabilizer, into a solution containing tris(pentafluorophenyl)borane, which is an aryl boron compound, in a mixed solvent of methylcyclohexane and toluene which are hydrocarbon solvents.

A test solution was prepared in the same manner as described in Example 1, except that a solution containing 5.98 g of tris(pentafluorophenyl)borane, 87.92 g of methylcyclohexane, and 9.98 g of toluene, in place of 30.89 g of tris (pentafluorophenyl)borane, 456.98 g of methylcyclohexane, and 73.95 g of toluene in Example 1, was prepared, and to this solution, 2.29 g of diisopropyl ether was added in place of 10.04 g of diethyl ether. In this test solution, the concentration of tris(pentafluorophenyl)borane was 5.6% by mass, relative to the total mass of the solution, and the molar ratio of diisopropyl ether to tris(pentafluorophenyl)borane was 1.9.

Just after the test solution was prepared, it was put in two SUS bottles, sealed, and stored under normal pressure at room temperature. A part of the test solution was taken out just after the preparation, i.e., at the initiation of storage (Day 0) and at Day 68, respectively, and by measuring $^{19}F$-NMR spectra of the test solution taken out, the purity (%) of tris (pentafluorophenyl) borane at every storage day was calculated. The results are shown in Table 5 and Figure 1 (indicated by the symbol "-*-"). The purity of tris(pentafluorophenyl)borane just after its production was 98.3%.

TABLE 5

| Storage days | Purity of tris(pentafluorophenyl)borane (%) |
|---|---|
| 0 | 98.3 |
| 68 | 96.4 |

<<Comparative Example 1>>

In this comparative example, the storage stability of tris(pentafluorophenyl)borane was examined without mixing an stabilizer into a solution containing tris (pentafluorophenyl) borane, which is an aryl boron compound, in a mixed solvent of methylcyclohexane and toluene, which are hydrocarbon solvents.

In this comparative example, 466.54 g a solution of tris(pentafluorophenyl)borane obtained in the same manner as described in Example 1 was used as a test solution. Just after this test solution was prepared, it was put in four SUS bottles as-is, sealed, and stored under normal pressure at room temperature. A part of the test solution was taken out just after the preparation, i.e., at the initiation of storage (Day 0), at Day 33, Day 91, and Day 236, respectively, and by measuring $^{19}F$-NMR spectra of the test solution taken out, the purity (%) of tris(pentafluorophenyl)borane at every storage day was calculated. The results are shown in Table 6 and Figure 1 (indicated by the symbol "-●-"). The purity of tris (pentafluorophenyl)borane just after its production was 98.2%.

TABLE 6

| Storage days | Purity of tris(pentafluorophenyl)borane (%) |
|---|---|
| 0 | 98.2 |
| 33 | 94.6 |
| 91 | 93.6 |
| 236 | 92.9 |

As can be seen from Tables 1 to 3 and Figure 1, the purity of tris(pentafluorophenyl)borane was not changed within the limits of error during the duration of storage from the initiation of storage to Day 193 in the test solution of Example 1, into which diethyl ether was mixed at a molar ratio of 2.2 as a stabilizer (see the symbol "-Δ-" in Figure 1) ; during the duration of storage from the initiation of storage to Day 236 in the test solution of Example 2, into which 1,2-dimethoxyethane was mixed at a molar ratio of 2.0 as a stabilizer (see the symbol "-o-" in Figure 1) ; and during the duration of storage from the initiation of storage to Day 68 in the test solution of Example 3, into which 1, 2-dimethoxyethane was mixed at a molar ratio of 1.2 as a stabilizer (see the symbol "-▲-" in Figure 1). In addition, as can be seen from Table 4 and Figure 1, the purity of tris(pentafluorophenyl)borane was reduced only by 1.5% during the duration of storage from the initiation of storage to Day 68 in the test solution of Example 4, into which 1,2-dimethoxyethane was mixed at a molar ratio of 0.52 as a stabilizer (see the symbol "-■-" in Figure 1). Further, as can be seen from Table 5 and Figure 1, the purity of tris (pentafluorophenyl)borane was reduced only by 1.9% during the duration of storage from the initiation of storage to Day 68 in the test solution of Example 5, into which diisopropyl ether was mixed at a molar ratio of 1.9 as a stabilizer (see the symbol "-*-" in Figure 1).

In contrast, as can be seen from Table 6 and Figure 1, the purity of tris(pentafluorophenyl)borane was reduced by 3.6% at only Day 33 after the initiation of storage, and it was further reduced gradually thereafter and reduced by 4.6% at Day 91 and by 5.3% at Day 236 in the test solution of Comparative Example 1, into which no stabilizer was mixed (see the symbol "-●-" in Figure 1).

From these results, it is found that by mixing an ether compound which has higher affinity for an aryl boron compound than water as an stabilizer into a solution or slurry containing the aryl boron compound in a hydrocarbon solvent, the aryl boron compound can stably be stored over a long term, while keeping its high purity, in the form of forming a substantially homogeneous system in the case of a solution or in the form of forming a substantially homogeneous system by heating in the case of slurry.

The stabilizing method and the stabilized composition of the present invention make it possible to store aryl boron compounds, which are unstable toward moisture, stably over a long term, while keeping their high purity, in the form of forming a substantially homogeneous system in the case of a solution or in the form of forming a substantially homogeneous system by heating in the case of slurry. Because aryl boron compounds are useful as catalysts or as starting materials for synthesizing their derivatives, the present invention makes great contributions to the fields in which aryl boron compounds are used as catalysts or in which useful derivatives are synthesized from aryl boron compounds.

## Claims

1. A method for stabilizing an aryl boron compound of formula (1):

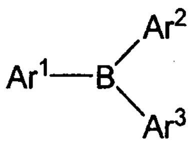

(1)

wherein $Ar^1$, $Ar^2$, and $Ar^3$ are independently a substituted or non-substituted aryl group, in which when the aryl group is substituted, a substituent (or substituents) is (are) at least one selected from halogen atoms, alkyl groups, and alkoxy groups, comprising mixing an ether compound of formula (2):

$R^1$-O-$R^2$ (2)

wherein $R^1$ and $R^2$ are independently an alkyl group, an alkoxyalkyl group, or a substituted or non-substituted aryl group, or $R^1$ and $R^2$ may be combined to form a substituted or non-substituted oxygen-containing heterocycle together with an adjacent oxygen atom, in which when the aryl group is substituted and/or when the oxygen-containing heterocycle is substituted, a substituent (or substituents) is (are) at least one selected from halogen atoms, alkyl groups, and alkoxy groups, as a stabilizer, into a solution or slurry containing the aryl boron compound in a hydrocarbon solvent, wherein the molar ratio of the stabilizer to the aryl boron compound is 0.5 or higher.

2. The stabilizing method according to claim 1, wherein the aryl boron compound is an aryl boron compound of formula (1) :

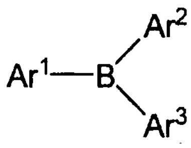

(1)

wherein $Ar^1$, $Ar^2$, and $Ar^3$ are aryl groups substituted with at least one fluorine atom.

**3.** A stabilized composition of an aryl boron compound, comprising an aryl boron compound of formula (1):

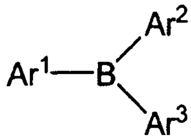

(1)

wherein $Ar^1$, $Ar^2$, and $Ar^3$ are independently a substituted or non-substituted aryl group, in which when the aryl group is substituted, a substituent (or substituents) is (are) at least one selected from halogen atoms, alkyl groups, and alkoxy groups, and an ether compound of formula (2):

**$R^1$-O-$R^2$** (2)

wherein $R^1$ and $R^2$ are independently an alkyl group, an alkoxyalkyl group, or a substituted or non-substituted aryl group, or $R^1$ and $R^2$ may be combined to form a substituted or non-substituted oxygen-containing heterocycle together with an adjacent oxygen atom, in which when the aryl group is substituted and/or when the oxygen-containing heterocycle is substituted, a substituent (or substituents) is (are) at least one selected from halogen atoms, alkyl groups, and alkoxy groups, as a stabilizer, in a hydrocarbon solvent, wherein the molar ratio of the stabilizer to the aryl boron compound is 0.5 or higher.

**4.** The stabilized composition according to claim 3,
wherein the aryl boron compound is an aryl boron compound of formula (1):

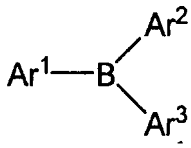

(1)

wherein $Ar^1$, $Ar^2$, and $Ar^3$ are aryl groups substituted with at least one fluorine atom.

## Patentansprüche

**1.** Verfahren zum Stabilisieren einer Arylborverbindung der Formel (1):

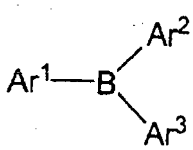

(1)

worin $Ar^1$, $Ar^2$ und $Ar^3$ unabhängig voneinander eine substituierte oder nicht-substituierte Arylgruppe sind, worin, wenn die Arylgruppe substituiert ist, ein Substituent (oder Substituenten) mindestens einer ist bzw. sind, ausgewählt aus Halogenatomen, Alkylgruppen und Alkoxygruppen, umfassend das Mischen einer Etherverbindung der Formel (2):

$R^1$-O-$R^2$ (2)

worin $R^1$ und $R^2$ unabhängig voneinander eine Alkylgruppe, eine Alkoxyalkylgruppe oder eine substituierte oder nicht-substituierte Alkylgruppe sind oder $R^1$ und $R^2$ unter Bildung eines substituierten oder nicht-substituierten sauerstoffhaltigen Heterozyklus zusammen mit einem benachbarten Sauerstoffatom miteinander kombiniert sein können, worin, wenn die Arylgruppe substituiert ist und/oder wenn der sauerstoffhaltige Heterozyklus substituiert ist, ein Substituent (oder Substituenten) mindestens einer ist bzw. sind, ausgewählt aus Halogenatomen, Alkylgruppen und Alkoxygruppen, als ein Stabilisator in eine Lösung oder Aufschlämmung, enthaltend die Arylborverbindung in einem Kohlenwasserstofflösungsmittel, wobei das Molverhältnis des Stabilisators zu der Arylborverbindung 0,5 oder höher ist.

**2.** Stabilisierungsverfahren gemäß Anspruch 1, wobei die Arylborverbindung eine Arylborverbindung der Formel (1) ist:

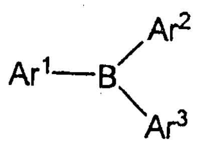

(1)

worin $Ar^1$, $Ar^2$ und $Ar^3$ Arylgruppen, substituiert mit mindestens einem Fluoratom, sind.

**3.** Stabilisierte Zusammensetzung einer Arylborverbindung, umfassend eine Arylborverbindung der Formel (1):

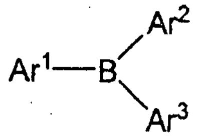

(1)

worin $Ar^1$, $Ar^2$ und $Ar^3$ unabhängig voneinander eine substituierte oder nicht-substituierte Arylgruppe sind, worin, wenn die Arylgruppe substituiert ist, ein Substituent (oder Substituenten) mindestens einer ist bzw. sind, ausgewählt aus Halogenatomen, Alkylgruppen und Alkoxygruppen, und eine Etherverbindung der Formel (2):

$$R^1\text{-O-}R^2 \qquad (2)$$

worin $R^1$ und $R^2$ unabhängig voneinander eine Alkylgruppe, eine Alkoxyalkylgruppe oder eine substituierte oder nicht-substituierte Alkylgruppe sind oder $R^1$ und $R^2$ unter Bildung eines substituierten oder nicht-substituierten sauerstoffhaltigen Heterozyklus zusammen mit einem benachbarten Sauerstoffatom miteinander kombiniert sein können, worin, wenn die Arylgruppe substituiert ist und/oder wenn der sauerstoffhaltige Heterozyklus substituiert ist, ein Substituent (oder Substituenten) mindestens einer ist bzw. sind, ausgewählt aus Halogenatomen, Alkylgruppen und Alkoxygruppen, als ein Stabilisator in einem Kohlenwasserstofflösungsmittel, wobei das Molverhältnis des Stabilisators zu der Arylborverbindung 0,5 oder höher ist.

**4.** Stabilisierte Zusammensetzung gemäß Anspruch 3, wobei die Arylborverbindung eine Arylborverbindung der Formel (1) ist:

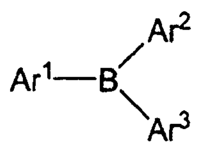

(1)

worin $Ar^1$, $Ar^2$ und $Ar^3$ Arylgruppen, substituiert mit mindestens einem Fluoratom, sind.

## Revendications

**1.** Procédé de stabilisation d’un composé d’aryle et bore de formule (1) :

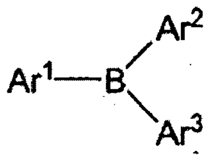 (1)

dans laquelle Ar1, Ar2, et Ar3 représentent, de manière indépendante, un groupe aryle substitué ou non substitué, dans lequel lorsque le groupe aryle est substitué, un substituant (ou des substituants) est (sont) au moins un élément sélectionné à partir d'atomes d'halogène, de groupes alkyle, et de groupes alkoxy, comprenant le mélange d'un composé éther de formule (2) :

$R^1$-O-$R^2$ (2)

dans laquelle R1 et R2 représentent, de manière indépendante, un groupe alkyle, un groupe alkoxyalkyle, ou un groupe aryle substitué ou non substitué, ou R1 et R2 peuvent être mélangés afin de former un hétérocycle contenant de l'oxygène substitué ou non substitué, ensemble avec un atome d'oxygène adjacent, dans lequel, lorsque le groupe aryle est substitué et/ou lorsque l'hétérocycle contenant de l'oxygène est substitué, un ou plusieurs substituants sont au moins un élément sélectionné à partir d'atomes d'halogène, de groupes alkyle, et de groupes alkoxy, en tant qu'agent de stabilisation, dans une solution ou pâte contenant le composé d'aryle et bore dans un solvant hydrocarboné, dans lequel le rapport molaire de l'agent de stabilisation sur le composé d'aryle et bore est supérieur ou égal à 0,5.

2. Procédé de stabilisation selon la revendication 1, dans lequel le composé d'aryle et bore est un composé d'aryle et bore de formule (1) :

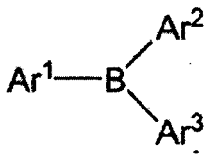 (1)

dans laquelle Ar1, Ar2, et Ar3 sont des groupes aryles substitués par au moins un atome de fluor.

3. Composition stabilisée d'un composé d'aryle et bore, comprenant un composé d'aryle et bore de formule (1) :

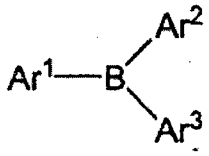 (1)

dans laquelle Ar1, Ar2, et Ar3 représentent, de manière indépendante, un groupe aryle substitué ou non substitué, dans laquelle lorsque le groupe aryle est substitué, un ou plusieurs substituants sont au moins un élément sélectionné à partir d'atomes d'halogène, de groupes alkyles, et de groupes alkoxy, et un composé éther de formule (2) :

$R^1$-O-$R^2$ (2)

dans laquelle R1 et R2 représentent, de manière indépendante, un groupe alkyle, un groupe alkoxyalkyle, ou un groupe aryle substitué ou non substitué, ou R1 et R2 peuvent être mélangés afin de former un hétérocycle contenant de l'oxygène substitué ou non substitué ensemble avec un atome d'oxygène adjacent, dans laquelle lorsque le groupe aryle est substitué et/ou lorsque l'hétérocycle contenant de l'oxygène est substitué, un ou plusieurs substituants sont au moins un élément sélectionné à partir d'atomes d'halogène, de groupes alkyles, et de groupes alkoxy, en tant qu'agent de stabilisation, dans un solvant hydrocarboné, dans lequel le rapport molaire de l'agent de stabilisation sur le composé d'aryle et bore est supérieur ou égal à 0,5.

4. Composition stabilisée selon la revendication 3, dans laquelle le composé d'aryle et bore est un composé d'aryle et bore de formule (1) :

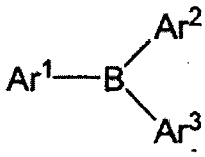

(1)

dans laquelle Ar1, Ar2, et Ar3 sont ses groupes aryles substitués par au moins un atome de fluor.

FIG. 1

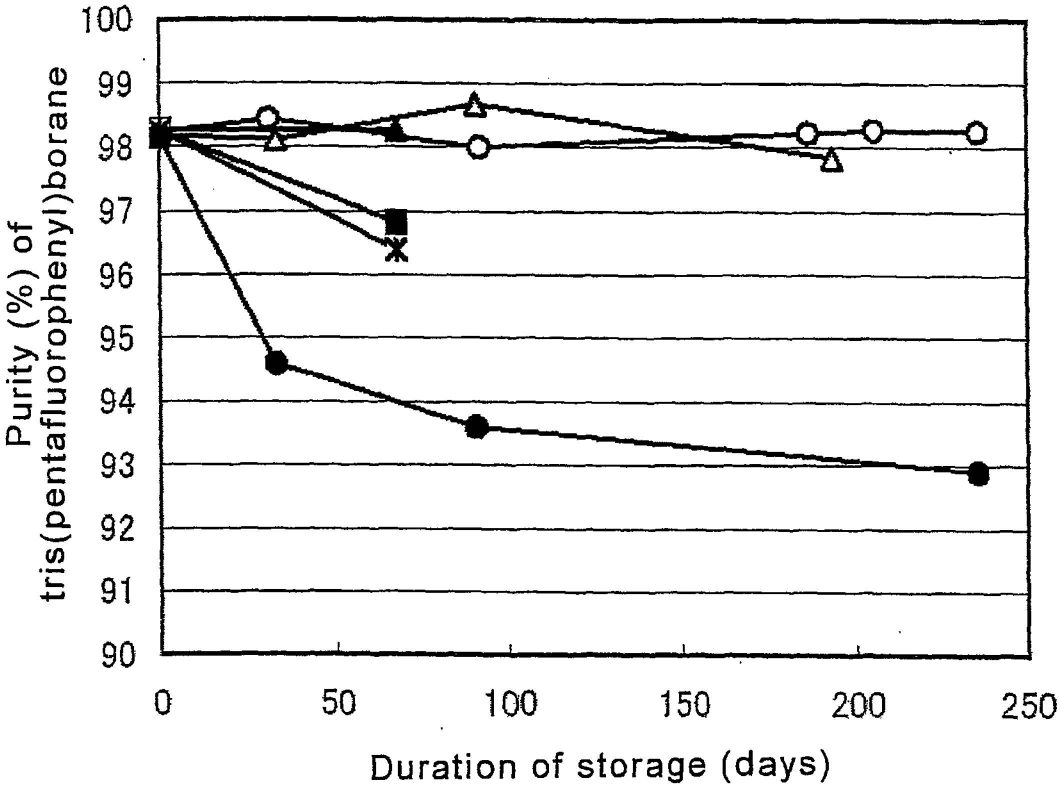
Purity (%) of tris(pentafluorophenyl)borane
100
99
98
97
96
95
94
93
92
91
90
0
50
100
150
200
250
Duration of storage (days)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6247978 A
- JP 8253485 A
- JP 6247979 A
- JP 2000001492 A
- JP 11029576 A
- EP 0903351 A1
- JP 9291092 A


### Non-patent literature cited in the description


- **J.L.W. POHLMANN.** Preparation and Characterization of Group IIIA Derivatives. *Zeitschrift für Naturforschung,* 1965, vol. 20, 5-11
- **A.G. MASSEY.** Tris(pentafluorophenyl)boron. *Proceedings of the Chemical Society,* July 1963, 212